(19) Europäisches Patentamt
European Patent Office
Office européen des brevets

(11) **EP 4 198 837 A1**

(12) **EUROPEAN PATENT APPLICATION**

(43) Date of publication:
**21.06.2023 Bulletin 2023/25**

(51) International Patent Classification (IPC):
**G06N 5/045** (2023.01)    **G06N 3/045** (2023.01)

(21) Application number: **22212970.2**

(52) Cooperative Patent Classification (CPC):
**G06N 5/045; G06N 3/045**

(22) Date of filing: **13.12.2022**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.12.2021 US 202117555234**

(71) Applicant: **SAP SE**
**69190 Walldorf (DE)**

(72) Inventors:
• **Farooqi, Waqas Ahmad**
  **69190 Walldorf (DE)**
• **Schmidt, Eckehard**
  **69190 Walldorf (DE)**
• **Grill, Jonas**
  **69190 Walldorf (DE)**

(74) Representative: **Müller-Boré & Partner**
**Patentanwälte PartG mbB**
**Friedenheimer Brücke 21**
**80639 München (DE)**

(54) **METHOD AND SYSTEM FOR GLOBAL EXPLAINABILITY OF NEURAL NETWORKS**

(57)    The layers of a neural network model are traversed in sequence one or more times while generating a plurality of relevance scores each time based on neuron weights and neuron biases of the neuron network model. Each relevance score of the plurality of relevance scores quantifies a relevance of a neuron in a lower layer of the sequence of layers to a higher layer of the sequence of layers. One or more relevance vectors can be populated from the plurality of relevance scores generated at the one or more times. Each of the relevance scores in each relevance vector quantifies a relevance of one of the input features to a task for which the neural network model is trained to perform. An explanation of a behavior of the neural network as a whole is generated based on the one or more relevance vectors.

FIG. 1

**Description**

**FIELD**

The field relates generally to artificial neural networks and explainable artificial intelligence.

**BACKGROUND**

Deep learning allows for the development of more accurate artificial intelligence (AI) than other machine learning methods, even for complex data structures. Unlike conventional machine learning methods, a deep learning model can improve its predictions over time by continuously learning from new transactions. This process of continuous training can be automated, which can allow the deep learning model to remain current at all times.

However, it is challenging to use deep learning in applications where accountability and transparency are essential. This is because the learned patterns and embeddings in deep learning are hidden in a deep neural network (also called deep net) in the form of neuron weights and biases such that the factors that led to the predictions by the deep learning cannot be retrieved without complex and expensive analyses. This black box behavior of deep nets currently limits the usability of deep learning in practical domains where the users demand predictions along with the factors that led to the predictions.

**BRIEF DESCRIPTION OF THE DRAWINGS**

FIG. 1 is a block diagram of an example system implementing explainable AI (XAI) generation.

FIG. 2 is a block diagram of an example method implementing XAI generation.

FIGS. 3A-3G are block diagrams illustrating working of an XAI model with a single-output neural network model, according to one example.

FIGS. 4A-4B are block diagrams illustrating working of an XAI model with a multi-output neuron network model, according to another example.

FIG. 5 is a block diagram illustrating an example system implementing XAI generation, according to another example.

FIG. 6 is a flowchart illustrating a method of implementing a generalized use case of XAI generation based on the system illustrated in FIG. 5, according to one example.

FIG. 7 is a block diagram of an example computing system in which described technologies can be implemented.

FIG. 8 is a block diagram of an example cloud computing environment that can be used in conjunction with the technologies described herein.

**DETAILED DESCRIPTION**

**Example A-Overview**

Training of a deep neural network involves minimizing a loss function that compares a value predicted by the deep neural network to an actual value. During the training, the deep neural network learns to recognize and use the patterns in the data. In particular, the deep neural network learns how to weight the individual features of the data and what conclusions it can draw from the data. The parameters adjusted during the training are the information stored in the weights and biases. Accordingly, the information about how the deep neural network processes the data is stored in the weights and biases.

As disclosed herein, AI explanation generation can be used to explain the reasons behind predictions of a neural network, such as a deep neural network. For example, an explanation of the behavior of a neural network as a whole can be generated from weights and biases of the neural network. The described technology can greatly enhance the usability of deep neural networks for applications sensitive to accountability and transparency.

**Example B-Example System Implementing XAI Generation**

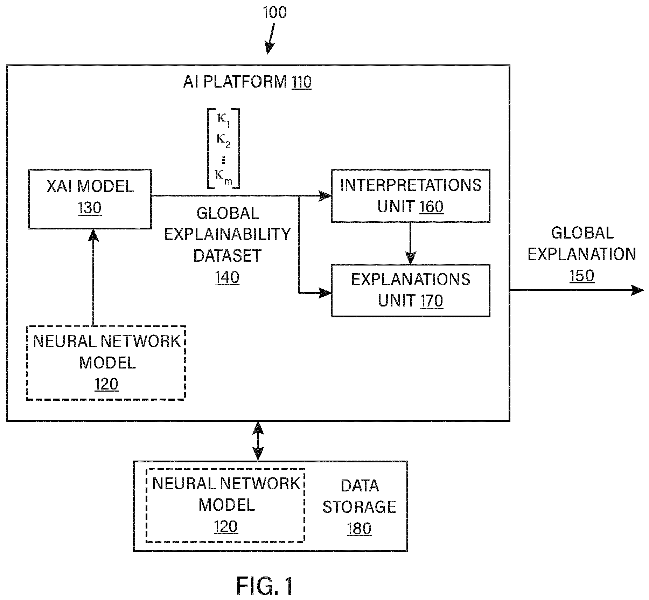

FIG. 1 is a block diagram of an example system 100 implementing explainable AI (XAI) generation. The example system 100 includes an AI platform 110 that can generate a global explanation 150 for a neural network model 120. The AI platform 110 includes one or more explanation and interpretation models. For illustrative purposes, the AI platform 110 is shown as including an XAI model 130 that is configured to generate a global explainability dataset 140, which can be outputted as the global explanation 150 or further processed to generate the global explanation 150.

The term "model" generally means a function encoded as a computer program. The neural network model 120 is configured to receive an input vector with one or more input features and generate one or more outputs. In one implementation, the neural network model 120 can be a deep neural network model (hereafter, DNN model), which is a neural network model with at least two hidden layers. In one example, the DNN model can be a trained neural network model (hereafter, trained NN model). In machine learning, a model is trained to perform a task by running a machine learning algorithm on a dataset. Once the model has been trained for the task (i.e., the machine learning algorithm has found a function that is sufficiently accurate for performing the given task in terms of matching inputs to outputs in the dataset), the trained model can be used for making predictions on new examples or for making inferences. In general, the term "trained NN model" means that the weights and biases of the neural network model have been adjusted through training of the neural network model with dataset(s).

The XAI model 130 accepts the neural network model 120 as input. The global explainability dataset 140 generated by the XAI model 130 comprises one or more relevance vectors $\kappa$. Each relevance vector $\kappa$ can have $m$ relevance scores, where $m$ is the number of input features that the neural network model 120 is configured to receive ($m$ is given by the number of input neurons in the neural network model) to perform a particular task. The relevance scores are computed using weights and biases of the neural network model 120. Each relevance score in the relevance vector $\kappa$ corresponds to one of the input features and quantifies the importance or relevance of the input feature to the task the neural network model 120 is trained to perform.

The AI platform 110 can include an interpretations unit 160, which can transform the relevance vectors in the global explainability dataset 140 into a form that can be visualized and/or interpreted by an end user. The transformations that can be carried out by the interpretations unit 160 include, but are not limited to, normalization, regularization, scaling, mapping to higher or lower dimension space, transforming into different numeric base system, transformation in frequency or time domain, and the like. The AI platform 110 can include an explanations unit 170, which can take the global explainability dataset 140 or the output of the interpretations unit 160 and map the data into a context that will be easily understood by the end user.

In a particular example, the XAI model 130 can generate the global explainability dataset 140. The interpretations unit 160 and/or explanations unit 170 can receive the global explainability dataset 140 and transform the dataset into percentages and/or ratios. These ratios can be converted into histograms, pie and/or line graphs, heatmaps, and the like to give further insights. In some cases, the dataset could also be scaled or normalized. In some cases, word clouds or images can be generated. The results can be mapped into a context so that the relevance scores in the global explainability dataset 140 are expressed in terms that the end user would easily understand and be able to act on.

The XAI model 130 can be a function (or functions) encoded as a computer program. Similarly, the interpretations unit 160 and explanations unit 170 can be computer programs. The system 100 can include a data storage 180 from which the AI platform 110 can fetch the neural network model 120. The AI platform 110 can additionally store the global explainability dataset 140 in the data storage 180. The AI platform 110 can also retrieve other data for use in the interpretations unit 160 and/or explanations unit 170. The AI platform 110 can be implemented in a computer system. The AI platform 110 can be stored in one or more computer-readable storage media or computer-readable storage devices. The technologies described herein can be generic to the specifics of operating systems or hardware and can be applied in any variety of environments to take advantage of the described features.

**Example C-Example Method Implementing XAI Generation**

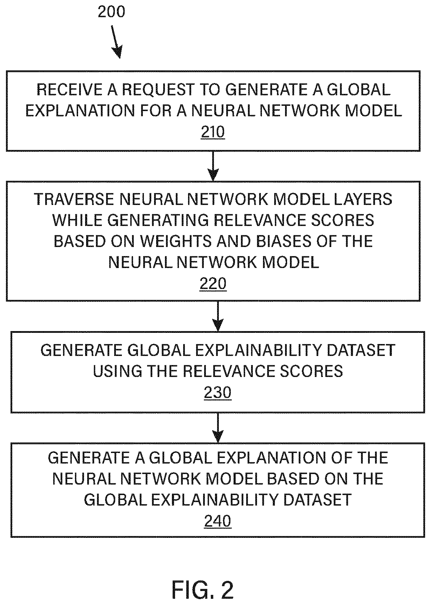

FIG. 2 is a flowchart of an example method 200 of generating a global explanation for a neural network model and can be performed, for example, by the system 100 (see Example B). The global explanation generated by the method 200 can be used to understand the behavior of a neural network model during different phases of the neural network life cycle.

In the example, at 210, the method receives a request to generate a global explanation for a neural network model. The neural network model has $m$ input neurons configured to receive an input vector with $m$ input features. The neural network model has a plurality of neurons arranged in a sequence of layers (e.g., in a sequence of one or more hidden layers and an output layer). The neural network model has weights and biases. In one example, the neural network model can be a trained NN model, which means the weights and biases have been set by training the neural network model for a particular task with dataset(s). In one example, the neural network model can be a trained DNN model. The request can include sufficient information to retrieve the neural network model from memory or storage device(s) or can include the neural network model.

At 220, the method traverses the sequence of layers of the neural network model in a reverse direction (i.e., from the output layer to the first hidden layer). While traversing the sequence of layers, the method generates a plurality of relevance scores. The method uses the XAI model to compute the relevance scores. In one example, the XAI model uses only the weights and biases of the neural network model to generate the relevance scores (e.g., the XAI model does not use the neuron activations of the neural network model to generate the relevance scores). The method can traverse the sequence of layers one time or a plurality of times, depending on the number of output neurons in the output layer.

At 230, the method generates a global explainability dataset from the relevance scores. In one example, the global explainability dataset is generated by populating a relevance vector $\kappa$ with a subset of the plurality of relevance scores generated while traversing the sequence of layers of the neural network model (e.g., the relevance scores computed at the first hidden layer). Each relevance vector $\kappa$ can have a size $m$, where $m$ is the number of input features for the neural network model. Each relevance score in a relevance vector quantifies the relevance or importance of one of the input features to the task for which the neural network model is trained. In one example, the order of the relevance scores in the relevance vector $\kappa$ can match an expected order of the input features in the input vector such that there is a one-to-one correspondence between the relevance vector and the input vector. If the method traverses the sequence of layers a plurality of times, a relevance vector can be populated for each traversal of the sequence of layers and included in the global explainability dataset.

At 240, a global explanation for the neural network model is generated based on the global explainability dataset. The global explanation can include various transformations and metadata to facilitate understanding of the global explainability dataset by an end user. For example, the global explanation can include any of text, images, scores, percentages, graphs, histograms, and visual indicators configured to explain the global explainability dataset within a context of the end user.

In some cases, the global explainability dataset can be stored together with information identifying the neural network model whose behavior is explained by the global explainability dataset. When a subsequent request for a global explanation of a neural network model is received by the method 200, the method 200 can determine whether a global explainability dataset was previously generated for the neural network model indicated in the subsequent request. If global explainability dataset was previously generated and the neural network model has not changed since the global explainability dataset was previously generated, the method 200 can simply retrieve the stored global explainability dataset corresponding to the neural network model. The method 200 can then use the retrieved global explainability dataset to generate the global explanation.

The method 200 can be illustrated from alternative perspectives, e.g., from a perspective of an end user, which can be a human or a computer system or process. The method 200 and any of the other methods described herein can be performed by computer-executable instructions (e.g., causing a computing system to perform the method) stored in one or more computer-readable media (e.g., storage or other tangible media) or stored in one of more computer-readable storage devices. Such methods can be performed in software, firmware, hardware, or combinations thereof. Such methods can be performed at least in part by a computing system (e.g., one or more computing devices).

**Example D-Example XAI Model for Global Explainability**

Global explainability of a neural network model depicts the behavior of the neural network model as a whole. In particular, global explainability can show which are the most relevant or important input features for the task for which the neural network is trained to perform. In the example, an XAI model configured to generate global explainability dataset is built with the following considerations:

The XAI model receives a trained neural network model as input. The neural network model can be any type of neural network that does not have loops.

The XAI model calculates relevance scores of neurons in the neural network model based only on weights and biases of the neural network model. For example, neuron activations of the neural network model are not included in the relevance calculations.

The XAI model calculates the relevance scores while traversing the neural network model from the last layer (or output layer) to the first hidden layer, or in reverse propagation.

The XAI model is memory efficient. For example, once the relevance scores of a given layer L have been calculated using the relevance scores of a higher layer L+1, the relevance scores of the higher layer L + 1 can be discarded since they will not be needed to generate the relevance scores of the lower layer L - 1.

The XAI model treats the neurons of the output layer as equally relevant to the behavior of the neural network model.

The XAI model corrects for extreme polarities in neuron weights. For example, in a given layer of the neuron network model, the neuron weights can be positive or negative. If one neuron with a particularly negative value and another neuron with a particularly positive value enter one layer of the network, these two neurons might influence the results strongly in that layer, but in the next layer, the effect can be balanced out. To overcome this, absolute values of neuron weights can be considered in calculations of the relevance scores. Other approaches can include using non-linear operations, e.g., root mean square.

In the example, the XAI model can output global explainability dataset comprising one or more relevance vectors, each of which can contain a set of relevance scores. The relevance vector can have the same size as the number of input features of the neural network model (as determined by the number of input neurons of the neural network model). Each relevance score in the relevance vector corresponds to one of the input features and quantifies the relevance of the input feature to the task for which the neural network is trained.

In one implementation, computation of the relevance vector starts with computing the relevance at the last layer (or output layer) (which can also be stated as relevance scores of the neurons connecting the last hidden layer to the last layer). In one example, the relevance at the last layer can be expressed as follows:

$$\underline{\kappa}^L = \left( \alpha \underline{w}^L + \beta \underline{b}^{L-1} \right) \frac{1}{\lambda^L} \tag{1}$$

$$\begin{bmatrix} \kappa_1^L \\ \kappa_2^L \\ \kappa_3^L \\ \vdots \\ \kappa_\theta^L \end{bmatrix} = \left( \alpha \begin{bmatrix} w_{11}^L \\ w_{21}^L \\ w_{31}^L \\ \vdots \\ w_{\theta 1}^L \end{bmatrix} + \beta \begin{bmatrix} b_1^{L-1} \\ b_2^{L-1} \\ b_3^{L-1} \\ \vdots \\ b_\theta^{L-1} \end{bmatrix} \right) \frac{1}{\lambda^L} \tag{2}$$

$$\kappa_i^L = \left( \alpha w_{ij}^L + \beta b_i^{L-1} \right) \frac{1}{\lambda^L} = \left( \sum_i \left( \alpha w_{ij}^L, \beta b_i^{L-1} \right) \right) \frac{1}{\lambda^L} \tag{3}$$

Equations (1)-(3) are equivalent but use different notations or mathematical structures. Equation (1) is a generic form of the expression, Equation (2) is a vector representation of the expression, and Equation (3) is a scalar representation of the expression. In Equations (1) to (3), $L$ is the last layer (or the output layer); $L-1$ is a layer immediately below the last layer (or the last hidden layer); $i$ is the $i^{th}$ neuron in the layer $L$-1 ($i$ = 1, 2, 3, ..., $\theta$, where $\theta$ is the total number of neurons in the layer $L$-1); $\kappa_i^L$ is a relevance of an $i^{th}$ neuron in the layer $L$-1 to the layer $L$; $w_{ij}^L$ is a weight in the layer $L$ (or a weight connecting an $i^{th}$ neuron in the layer $L$-1 to $j^h$ neurons in the layer $L$ ($j$ = 1, 2, 3, ...$c$, where c is the number of neurons in the last layer)); $b_i^{L-1}$ is a bias term for an $i^{th}$ neuron in the layer $L$-1; $\lambda^L$ is the total number of neurons in the layer $L$; $\theta$ is the total number of neurons in the layer $L$-1; $\alpha$ is a scalar scaling factor; and $\beta$ is a scalar scaling factor.

Equations (1)-(3) show that the relevance of an $i^{th}$ neuron in the lower layer (or last hidden layer) $L$-1 to the last layer $L$ is a weighted linear combination of (a) weight connecting the $i^{th}$ neuron in the lower layer $L$-1 to the last layer $L$ and (b) the bias of the $i^{th}$ neuron in the lower layer $L$-1.

In one implementation, computation of the relevance vector further includes computing the relevance at each hidden layer (which can also be stated as relevance scores connecting neurons in each hidden layer to a higher layer). In one example, the relevance of each hidden layer can be expressed as follows:

$$\underline{\kappa}^L = \left( \alpha W^L \underline{\kappa}^{L+1} + \beta \underline{b}^{L-1} \right) \frac{1}{\lambda^L} \tag{4}$$

$$\begin{bmatrix} \kappa_1^L \\ \kappa_2^L \\ \kappa_3^L \\ \vdots \\ \kappa_\theta^L \end{bmatrix} = \left( \alpha \begin{bmatrix} w_{11}^L & w_{12}^L & w_{13}^L & \dots & w_{1\lambda}^L \\ w_{21}^L & w_{22}^L & w_{23}^L & \dots & w_{2\lambda}^L \\ w_{31}^L & w_{32}^L & w_{33}^L & \cdots & w_{3\lambda}^L \\ \vdots & \vdots & \vdots & \dots & \vdots \\ w_{\theta 1}^L & w_{\theta 2}^L & w_{\theta 3}^L & \cdots & w_{\theta\lambda}^L \end{bmatrix} \begin{bmatrix} \kappa_1^{L+1} \\ \kappa_2^{L+1} \\ \kappa_3^{L+1} \\ \vdots \\ \kappa_\lambda^{L+1} \end{bmatrix} + \beta \begin{bmatrix} b_1^{L-1} \\ b_2^{L-1} \\ b_3^{L-1} \\ \vdots \\ b_\theta^{L-1} \end{bmatrix} \right) \frac{1}{\lambda^L} \tag{5}$$

$$\kappa_i^L = \left( \sum_j \left( \alpha w_{ij}^L \kappa_j^{L+1} \right) + \beta b_i^{L-1} \right) \frac{1}{\lambda^L} \tag{6}$$

Equations (4) to (6) are equivalent but use different notations or mathematical structures. Equation (4) is a generic form of the expression, Equation (5) is a vector representation of the expression, and Equation (6) is a scalar representation of the expression. In Equations (4) to (6), $\kappa_i^L$ is a relevance value of an $i^{th}$ neuron in a lower layer $L$-1 to a given layer $L$; $w_{ij}^L$ is a weight in the given layer $L$ connecting an $i^{th}$ neuron in the lower layer $L$-1 to $j^{th}$ neurons in the given layer $L$; $b_i^{L-1}$ is a bias term for an $i^{th}$ neuron in the lower layer $L$-1, $\theta$ is the number of neurons in the lower layer $L$-1, A is the total number of neurons in the given layer $L$, $\alpha$ is a scalar scaling factor, and $\beta$ is a scalar scaling factor. The given layer $L$ is in a range from 1 to $N$, where $N$ is the total number of hidden layers in the neural network.

Equations (4) to (6) show that the relevance of an $i^{th}$ neuron in a lower layer $L$-1 to a given layer $L$ is a linear combination of (a) a sum of products of weights at the given layer $L$ and relevance scores at the higher layer $L$+1 and (b) the bias of the $i^{th}$ neuron in the lower layer $L$-1. For the last computation, i.e., computation of the relevance scores in the first hidden layer, the bias component of the linear combination is zero because the layer $L$-1 refers to the input layer, and the input layer does not contain biases.

### Example E—Example Working of the XAI Model

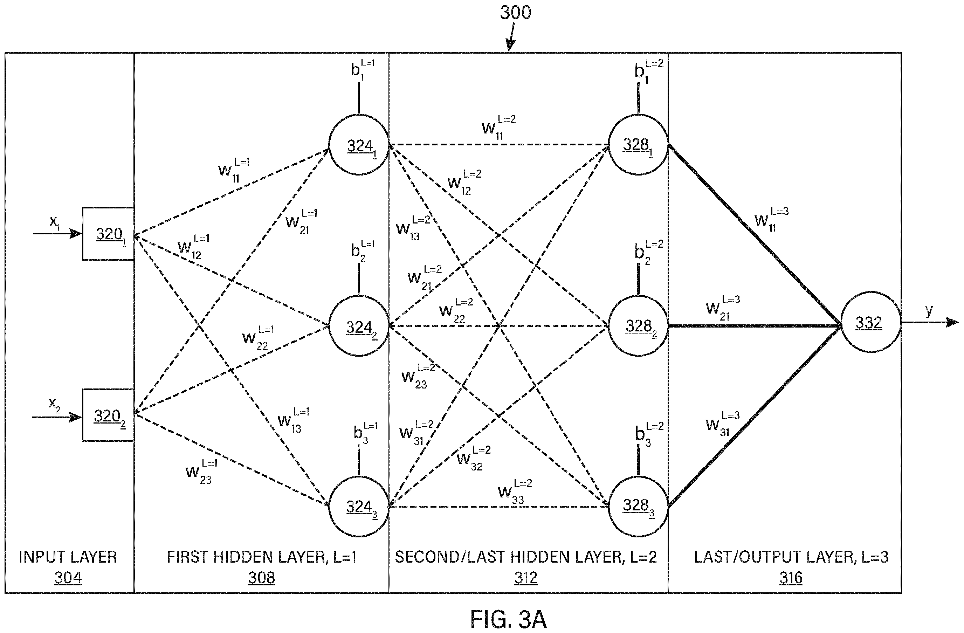

FIGS. 3A-3G illustrate an example of how the XAI model (see Example D) works. The working of the XAI model is described relative to a neural network model 300 that is configured to generate an output $y$ from an input vector x. The XAI can make calculations independently of the working of the neural network model 300. That is, it is not necessary to feed data to the input of the neural network model 300 to calculate the relevance vector by the XAI model.

The neural network model 300 includes an input layer 304, a first hidden layer 308, a second hidden layer 312 (which is also the last hidden layer), and a last layer 316 (which is also the output layer). The neural network model 300 receives input data through the input layer 304. The hidden layers 308, 312 are where manipulation of the input data occurs. The layers 308, 312 are called hidden because their workings are not directly accessible from outside the neural network. Also, the hidden layers are intermediate layers between the input layer 304 and the last layer 316. The last layer 316 is the final product of manipulating the data in the network. Although the neural network model 300 is illustrated as a feed forward network, the XAI model is not restricted to feed forward networks and could be used with any neural network model that does not have loops.

In the illustrated example, the input layer 304 has a first neuron $320_1$ that can sense an input feature $x_1$ and a second neuron $320_2$ that can sense an input feature $x_2$. As an example, a neural network model configured to map an image to an object can sense input features related to the image, such as edges in the image, pixel intensity, and so on. The first hidden layer 308 includes a first neuron $324_1$, a second neuron $324_2$, and a third neuron $324_3$ for manipulating data within the network. The second hidden layer 312 includes a first neuron $328_1$, a second neuron $328_2$, and a third neuron $328_3$ for manipulating data within the network. The last layer 316 includes an output neuron 332 that produces an output $y$. As such, the neural network model 300 is configured to map inputs $x_1$, $x_2$ to output $y$.

The neural network model 300 is an example of a deep neural network (DNN) in that the network has more than one hidden layer. For simplicity, the neural network model 300 is shown in FIG. 3A as having only one output neuron 332 in the last layer 316. In other examples, the neural network model 300 can be configured to have multiple output neurons in the last layer. In addition, the neural network model 300 can have far more numerous neurons that what is illustrated in FIG. 3A.

The first neuron $324_1$ in the first hidden layer $308_1$ is connected to the first neuron $320_1$ in the input layer 304 via a connection with weight $w_{11}^{L=1}$ and to the second neuron $320_2$ in the input layer 304 via a connection with weight $w_{21}^{L=1}$. The first neuron $324_1$ also has a bias $b_1^{L=1}$. The second neuron $324_2$ in the first hidden layer 308 is connected to the first neuron $320_1$ in the input layer 304 via a connection with weight $w_{12}^{L=1}$ and to the second neuron $320_2$ in the input layer 304 via a connection with weight $w_{22}^{L=1}$. The second neuron $324_2$ also has a bias $b_2^{L=1}$. The third neuron $324_3$ in the first hidden layer 308 is connected to the first neuron $320_1$ in the input layer 304 via a connection with weight $w_{13}^{L=1}$ and to the second neuron $320_2$ in the input layer 304 via a connection with weight $w_{23}^{L=1}$. The third neuron $324_3$ also has a bias $b_3^{L=1}$.

The first neuron $328_1$ in the second hidden layer 312 is connected to the first, second, and third neurons $324_1$, $324_2$, $324_3$ of the first hidden layer 308 via connections with weights $w_{11}^{L=2}$, $w_{21}^{L=2}$, and $w_{31}^{L=2}$, respectively. The first neuron $328_1$ also has a bias $b_1^{L=2}$. The second neuron $328_2$ in the second hidden layer 312 is connected to the first, second, and third neurons $324_1$, $324_2$, $324_3$ of the first hidden layer 308 via connections with weights $w_{12}^{L=2}$, $w_{22}^{L=2}$, and $w_{32}^{L=2}$, respectively. The second neuron $328_2$ is also connected to a bias $b_2^{L=2}$. The third neuron $328_3$ in the second hidden layer 312 is connected to the first, second, and third neurons $324_1$, $324_2$, $324_3$ of the first hidden layer 308 via connections with weights $w_{13}^{L=2}$, $w_{23}^{L=2}$, and $w_{33}^{L=2}$, respectively. The third neuron $328_3$ is also connected to a bias $b_3^{L=2}$ The output neuron 332 is connected to the first, second, and third neurons $328_1$, $328_2$, $328_3$ via connections with weights $w_{11}^{L=3}$, $w_{21}^{L=3}$, and $w_{31}^{L=3}$, respectively.

FIG. 3A illustrates calculation of the relevance at the last layer (or output layer) 316 (L=3). In FIG. 3A, the weight $w_{11}^{L=3}$ connecting the output neuron 332 in the last layer 316 to the first neuron $328_1$ in the last hidden layer (or second hidden layer) 312 (L=2) and the bias $b_1^{L=2}$ of the first neuron $328_1$ are used to calculate a first relevance value $\kappa_1^{L=3}$ at the last layer 316 according to Equations (1)-(3) in Example D.

The weight $w_{21}^{L=3}$ connecting the output neuron 332 to the second neuron $328_2$ in the last hidden layer 312 and the bias $b_2^{L-2}$ of the second neuron $328_2$ are used to calculate a second relevance value $\kappa_2^{L=3}$ at the last layer 316 according to Equations (1)-(3) in Example D.

The weight $w_{31}^{L=3}$ connecting the output neuron 332 to the third neuron $328_3$ in the last hidden layer 312 and the bias $b_3^{L=2}$ of the third neuron $328_3$ are used to calculate a third relevance value $\kappa_3^3$ at the last layer 316 according to Equations (1)-(3) in Example D.

The relevance scores at the last layer (L=3) can be expressed as follows:

$$\kappa_1^{L=3} = \left( \alpha w_{11}^{L=3} + \beta b_1^{L=2} \right) \frac{1}{\lambda^{L=3}} \qquad (7a)$$

$$\kappa_2^{L=3} = \left( \alpha w_{21}^{L=3} + \beta b_2^{L=2} \right) \frac{1}{\lambda^{L=3}} \qquad (7b)$$

$$\kappa_3^{L=3} = \left( \alpha w_{31}^{L=3} + \beta b_3^{L=2} \right) \frac{1}{\lambda^{L=3}} \qquad (7c)$$

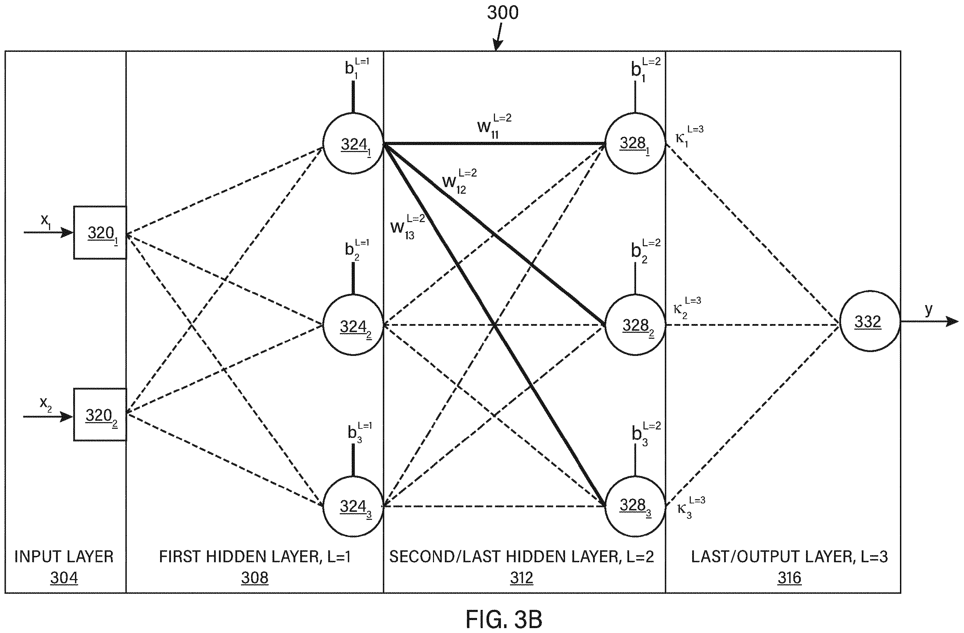

FIGS. 3B-3D illustrate calculation of the relevance at the last hidden layer (or second hidden layer) 312 (L=2). In FIG. 3B, the weights $w_{11}^{L=2}$, $w_{12}^{L=2}$, and $w_{13}^{L=2}$ connecting the first neuron $324_1$ in the first hidden layer 308 (L=1) to the neurons $328_1$, $328_2$, $328_3$ in the last hidden layer 312 (L=2), the bias $b_1^{L-1}$ of the first neuron $324_1$, and the relevance values at the last layer (or output layer) 316 (L=3) are used to calculate a first relevance value $\kappa_1^{L=2}$ at the last hidden layer 312 according to Equations (4)-(6) in Example D.

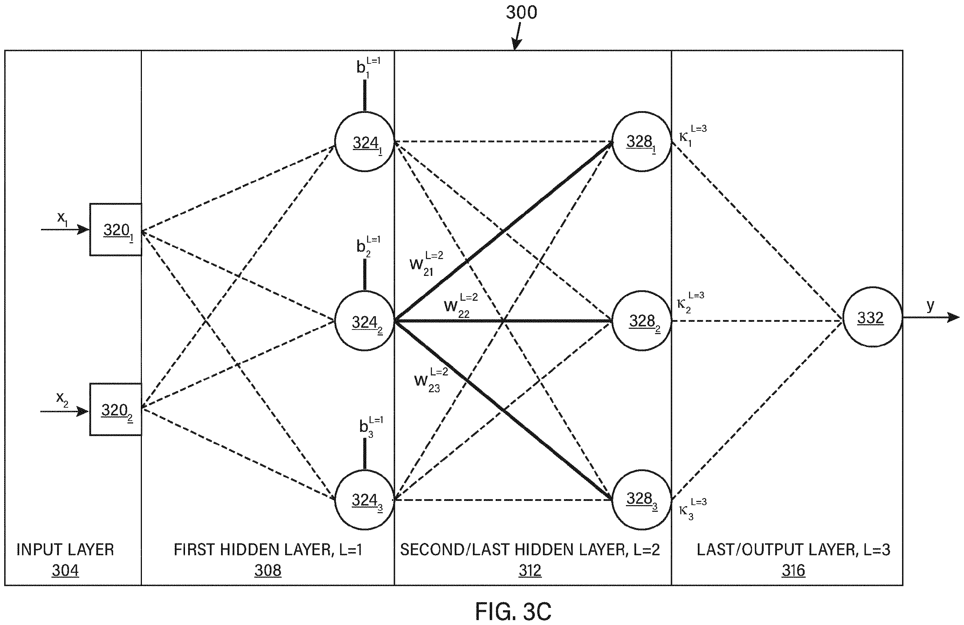

In FIG. 3C, the weights $w_{21}^{L=2}$, $w_{22}^{L=2}$, and $w_{23}^{L=2}$ connecting the second neuron $324_2$ in the first hidden layer 308 to the neurons $328_1$, $328_2$, $328_3$ in the second hidden layer 312, the bias $b_2^{L=1}$ of the second neuron $324_2$, and the relevance values at the last layer 316 (L=3) are used to calculate a second relevance value $\kappa_2^{L=2}$ at the last hidden layer 312 according to Equations (4)-(6) in Example D.

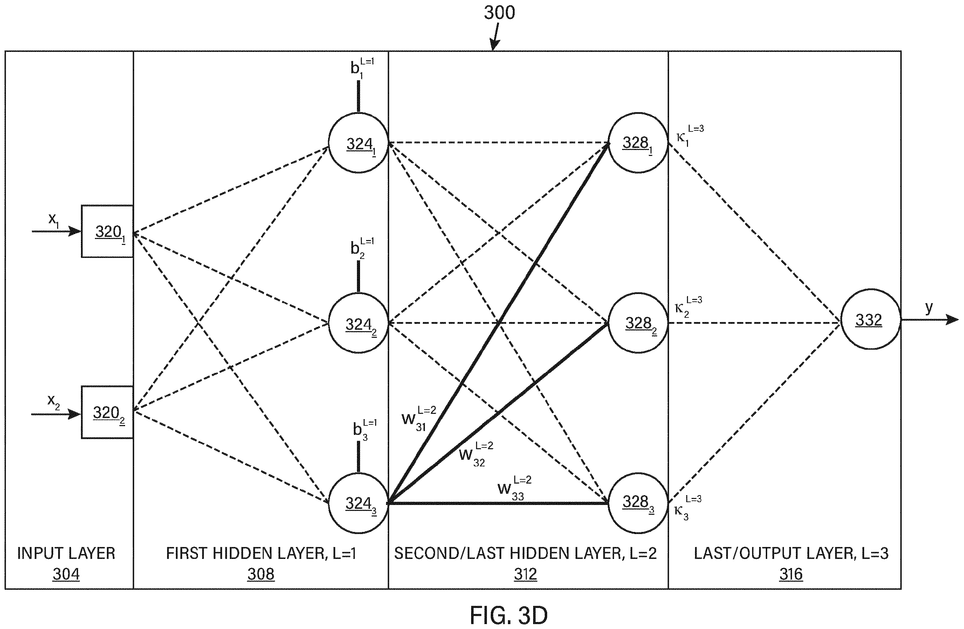

In FIG. 3D, the weights $w_{31}^{L=2}$, $w_{32}^{L=2}$, and $w_{33}^{L=2}$ connecting the third neuron $324_3$ in the first hidden layer 308 to the neurons $328_1$, $328_2$, $328_3$ in the last hidden layer 312, the bias $b_3^{L=1}$ of the third neuron $324_3$, and the relevance values at the last layer 316 are used to calculate a third relevance value $\kappa_3^{L=2}$ at the last hidden layer 312 according to Equations (4)-(6) in Example D.

The relevance scores at the last hidden layer 312 (L=2) can be expressed as follows:

$$\kappa_1^{L=2} = \left( \alpha \left( w_{11}^{L=2} \kappa_1^{L=3} + w_{12}^{L=2} \kappa_2^{L=3} + w_{13}^{L=2} \kappa_3^{L=3} \right) + \beta b_1^{L=1} \right) \frac{1}{\lambda^{L=2}} \qquad (8a)$$

$$\kappa_2^{L=2} = \left( \alpha \left( w_{21}^{L=2} \kappa_1^{L=3} + w_{22}^{L=2} \kappa_2^{L=3} + w_{23}^{L=2} \kappa_3^{L=3} \right) + \beta b_2^{L=1} \right) \frac{1}{\lambda^{L=2}} \qquad (8b)$$

$$\kappa_3^{L=2} = \left( \alpha \left( w_{31}^{L=2} \kappa_1^{L=3} + w_{32}^{L=2} \kappa_2^{L=3} + w_{33}^{L=2} \kappa_3^{L=3} \right) + \beta b_3^{L=1} \right) \frac{1}{\lambda^{L=2}} \qquad (8c)$$

After calculating the relevance scores at the last hidden layer 312 (L=2), the relevance scores calculated at the last layer 316 (L=3) can be discarded.

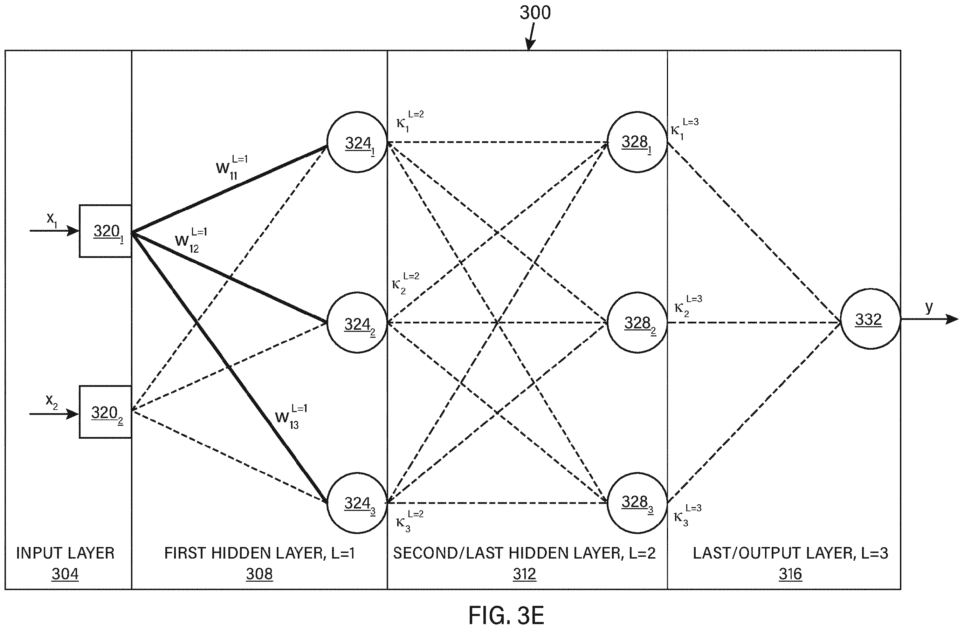

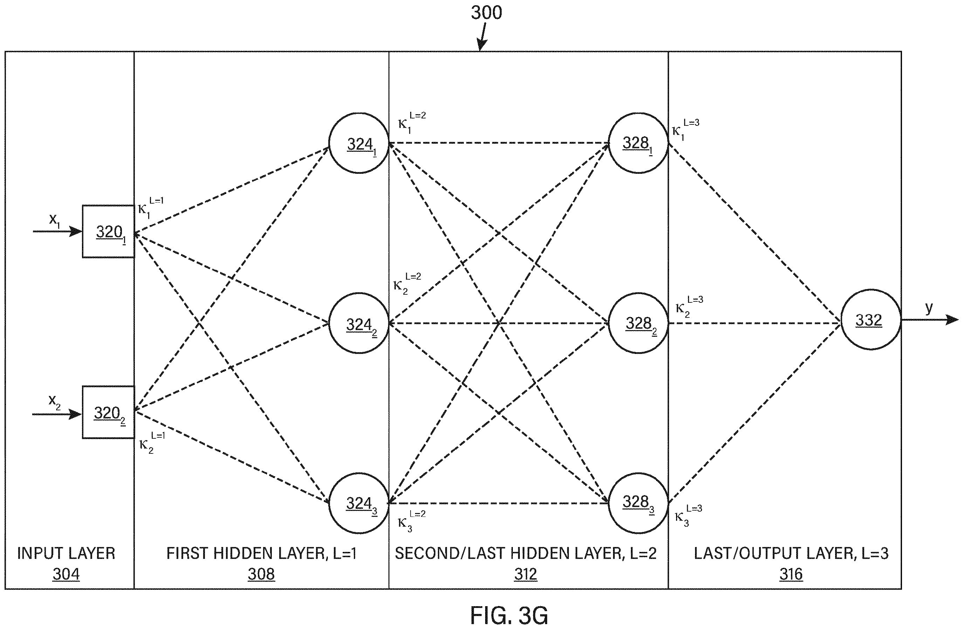

FIGS. 3E-3F illustrate calculation of the relevance at the first hidden layer 308 (L=1). In FIG. 3E, the weights $w_{11}^{L=1}$, $w_{12}^{L=1}$, and $w_{13}^{L=1}$ connecting the input neuron $320_1$ to the neurons $324_1$, $324_2$, $324_3$ of the first hidden layer 308 and the relevance scores associated with the last hidden layer 312 (L=2) are used to calculate a first relevance value $\kappa_1^{L=1}$ (shown in FIG. 3G) at the first hidden layer 308.

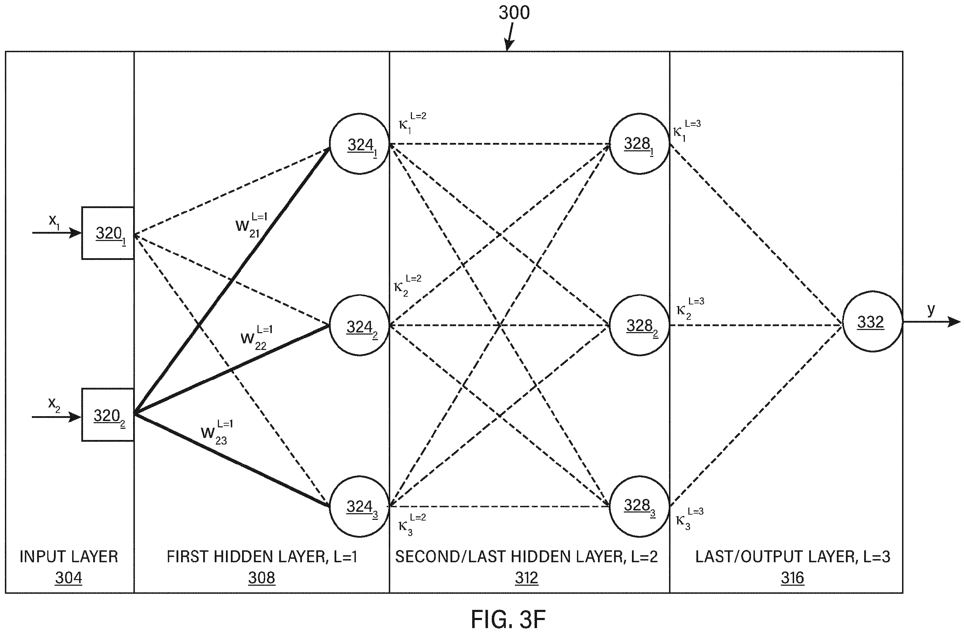

In FIG. 3F, the weights $w_{21}^{L=1}$, $w_{22}^{L=1}$, and $w_{23}^{L=1}$ connecting the input neuron $320_2$ to the neurons $324_1$, $324_2$, $324_3$ of the first hidden layer 308 and the relevance values at the last hidden layer 312 are used to calculate a second relevance value $\kappa_2^{L=1}$ (shown in FIG. 3G) at the first hidden layer 308.

The relevance scores at the first hidden layer 308 (L=1) can be expressed as follows:

$$\kappa_1^{L=1} = \left( \alpha \left( w_{11}^{L=1} \kappa_1^{L=2} + w_{12}^{L=1} \kappa_2^{L=2} + w_{13}^{L=1} \kappa_3^{L=2} \right) \right) \frac{1}{\lambda^{L=1}} \qquad (9a)$$

$$\kappa_2^{L=1} = \left( \alpha \left( w_{21}^{L=1} \kappa_1^{L=2} + w_{22}^{L=1} \kappa_2^{L=2} + w_{23}^{L=1} \kappa_3^{L=2} \right) \right) \frac{1}{\lambda^{L=1}} \qquad (9b)$$

After calculating the relevance scores at the first hidden layer 308, the relevance scores calculated at the last hidden layer 312 can be discarded.

The relevance scores $\kappa_1^{L=1}$, $\kappa_2^{L=1}$ calculated at the first hidden layer 308 are shown in FIG. 3G. The final output of the XAI model is a relevance vector populated with the relevance scores $\kappa_1^{L=1}$, $\kappa_2^{L=1}$ computed at the first hidden layer 308. A global explanation of the neural network model 300 can include the relevance vector (or an interpretation of the relevance vector) along with other data.

**Example F-Example Working of the XAI Model with Multi-Output Neural Network Model**

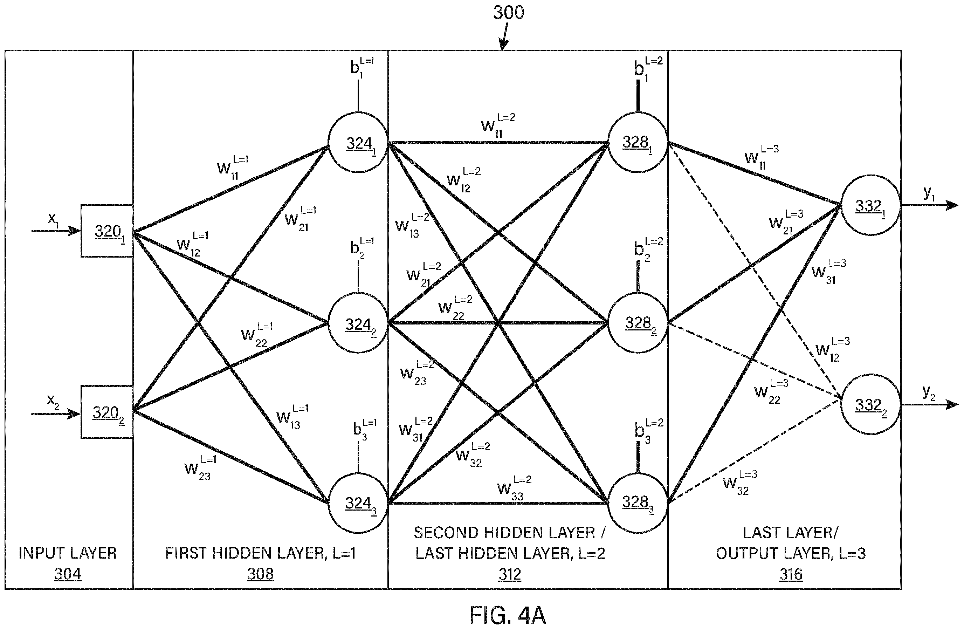

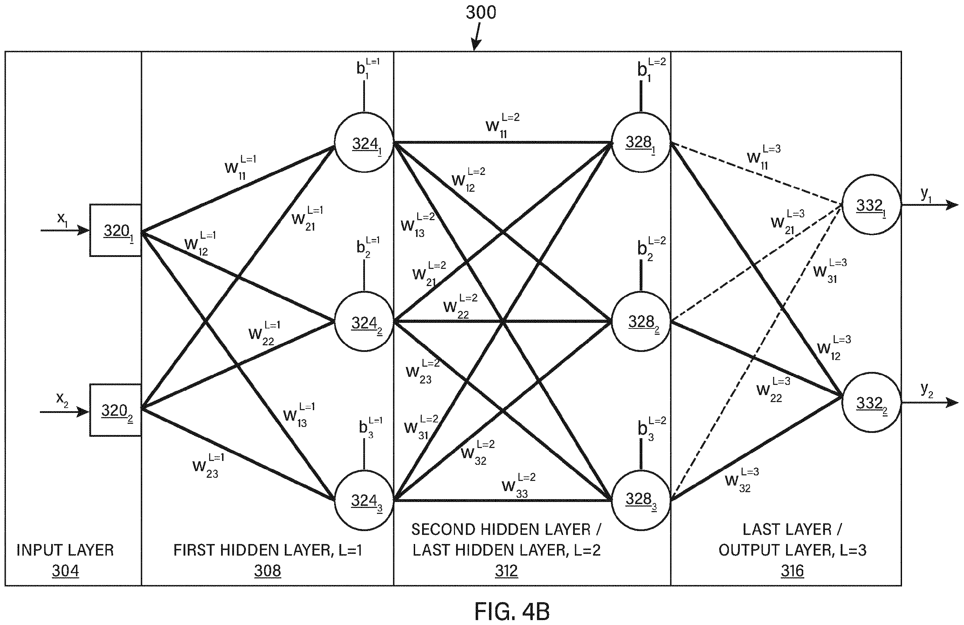

For a neural network model with multiple output neurons in the last layer, the calculations in Equations (1)-(6) (see Example E) are performed for each of the output neurons. For example, FIGS. 4A and 4B show the neural network model 300 modified to include two output neurons $332_1$, $332_2$. FIG. 4A shows the path from the input neurons to the output neuron $332_1$ across the sequence of layers with bold lines, and FIG. 4B shows the path from the input neurons to the output neuron $332_2$ in bold lines. Relevance scores can be computed according to the path highlighted in FIG. 4A to obtain a relevance vector corresponding to the output neuron $332_1$. Similarly, relevance scores can be computed according to the path highlighted in FIG. 4B to obtain a relevance vector corresponding to the output neuron $332_2$.

The process for computing the relevance vectors for the paths shown in FIGS. 4A and 4B is the same as described for computing the relevance vectors in FIGS. 3A-3G, with the exception of the particular weights involved in the computations at the last layer. For the path shown in FIG. 4A, the relevant weights are those that connect the neurons in the last hidden layer 312 (L=2) to the output neuron $332_1$ in the last layer 316 (L=3). The relevance scores at the last layer for the output neuron $332_1$ can be expressed as:

$$\kappa_1^{L=3} = \left( \alpha w_{11}^{L=3} + \beta b_1^{L=2} \right) \frac{1}{\lambda^{L=3}} \qquad (10a)$$

$$\kappa_2^{L=3} = \left( \alpha w_{21}^{L=3} + \beta b_2^{L=2} \right) \frac{1}{\lambda^{L=3}} \qquad (10b)$$

$$\kappa_3^{L=3} = \left( \alpha w_{31}^{L=3} + \beta b_3^{L=2} \right) \frac{1}{\lambda^{L=3}} \tag{10c}$$

For the path shown in FIG. 4B, the relevant weights are those that connect the neurons in the last hidden layer 312 (L=2) to the output neuron $332_2$ in the last layer 316 (L=3). The relevance scores at the last layer for the output neuron $332_2$ can be expressed as:

$$\kappa_1^{L=3} = \left( \alpha w_{12}^{L=3} + \beta b_1^{L=2} \right) \frac{1}{\lambda^{L=3}} \tag{11a}$$

$$\kappa_2^{L=3} = \left( \alpha w_{22}^{L=3} + \beta b_2^{L=2} \right) \frac{1}{\lambda^{L=3}} \tag{11b}$$

$$\kappa_3^{L=3} = \left( \alpha w_{32}^{L=3} + \beta b_3^{L=2} \right) \frac{1}{\lambda^{L=3}} \tag{11c}$$

Thus, in the example in FIGS. 4A and 4B, there will be two relevance vectors - one relevance vector for the output neuron $332_1$ and another relevance vector for the output neuron $332_2$. In general, if there are $m$ output neurons, there will be $m$ relevance vectors. In some cases, multiple relevance vectors computed by the XAI model can be represented with a single vector or with a matrix.

**Example G-Example System Implementing Global Explanation Generation**

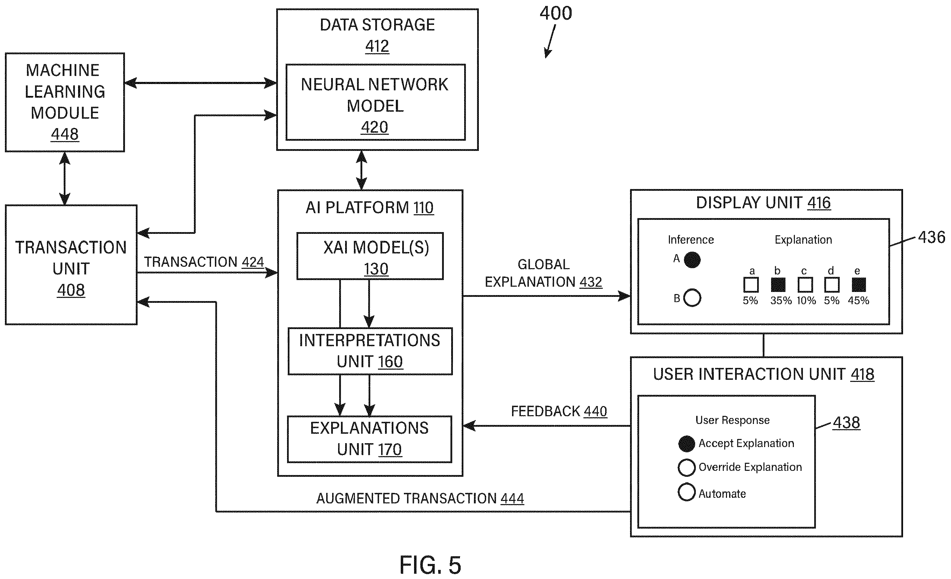

FIG. 5 is a block diagram illustrating an example system 400 implementing global explanation generation. The system 400 includes the AI platform 110, which can communicate with a transaction unit 408, a data storage 412, a display unit 416, and a user interaction unit 418. In the example, the AI platform 110 includes the XAI model 130, the interpretations unit 160, and the explanations unit 170 (as illustrated in FIG. 1).

In one example, the AI platform 110 can fetch a neural network model 420 from the data storage 412 for processing of a transaction 424 received from the transaction unit 408. The neural network model 420 can be a trained NN model. The neural network model 420 can be provided to the XAI model 130 for generation of a global explainability dataset, which can comprise one or more relevance vectors populated with relevance scores determined using weights and biases of the neural network model, as previously described. The AI platform 110 can output a global explanation 432 based on the global explainability dataset.

The display unit 416 can receive the global explanation 432 from the AI platform 110 and provide a visual representation 436 of the global explanation 432. The user interaction unit 418 can include a set of options 438 that allow further interaction with the global explanation 432. In response to selecting an option from the set of options 438, the user interaction unit 418 can provide further options to the user. For example, if the user wishes to override the explanation, the user interaction unit 418 can further display an interface that allows the user to adjust the explanation.

In some cases, the user interaction unit 418 can send feedback 440 to the AI platform 110 based on changes made at the user interaction unit 418. For example, the XAI model 130 can itself be adjusted based on the feedback 440. For example, Equations (1)-(6) show scalar scaling factors $\alpha$ and $\beta$, and one use of the user response can be to adjust these scaling factors to achieve an improved global explanation for a particular type of neural network model.

In some cases, the user interaction unit 418 can also send an augmented transaction 444 to the transaction unit 408. The augmented transaction 444 can include the user response. In some cases, the transaction unit 408 can include or communicate with a machine learning module 448. The machine learning module 448 can in some cases determine whether the neural network model 420 should be retrained or otherwise adjusted based on information contained in the augmented transaction 444. In some cases, the machine learning module 448 can trigger retraining or adjustment of the neural network model.

**Example H-Example Method Implementing XAI Generation**

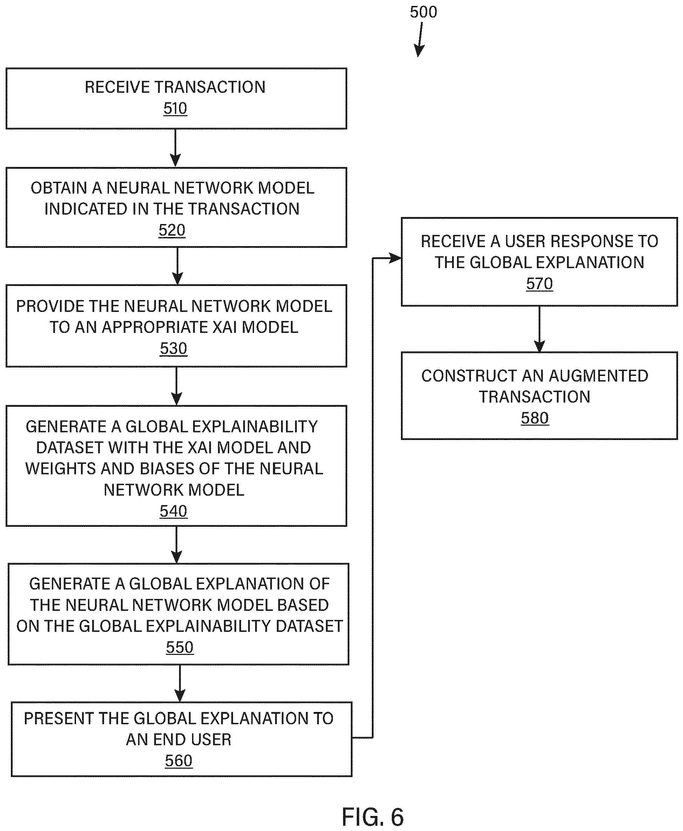

FIG. 6 is a flowchart of an example method 500 implementing XAI generation based on the system 400 (see Example G).

At 510, the method receives a transaction. The transaction contains a request for a global explanation of a neural network model, which can be a trained NN model. The transaction can include identifying information for the desired neural network model.

At 520, the method parses the transaction to determine the neural network model to use and obtains the neural network model.

At 530, the method parses the transaction to determine the XAI model to use in explaining the behavior of the neural network model and provides the neural network model to the appropriate XAI model.

At 540, the method generates global explainability dataset with the XAI model. The XAI model uses weights and biases of the input neural network model to generate one or more relevance vectors, which form the global explainability dataset.

At 550, the method generates a global explanation based on the global explainability dataset. The global explanation can be the raw global explainability dataset or information derived from the global explainability dataset. The global explanation can include metadata and the like to improve understanding of the relevance vectors in the global explainability dataset within a context of an end user.

At 560, the method can present the global explanation to an end user, which can be a human user or computer.

At 570, the method can receive a user response to the global explanation. For example, the method can present a set of options to the user from which the user can make a selection. For example, the set of options can include "accept the explanation" if the feature importance and relevance seem reasonable and appropriate, "override the explanation" if the feature importance and relevance seem to be in error, and "automate generation of the explanation" because the explanation can be trusted. The method can receive one of the options selected by the user. If the option includes overriding the explanation, the method can ask the user for adjustments to the explanation (e.g., adjustments to the relevance scores in the relevance vector(s)). The method can save the user response for further optimization of the XAI model and/or neural network model.

At 580, the method can construct an augmented transaction using information from the original transaction, the global explanation, and the user response to the global explanation. In some cases, the method can determine from the augmented transaction that the neural network model should be retrained or otherwise adjusted. The method can further trigger retraining or adjustment of the neural network model. The retrained/adjusted neural network model can be used to make predictions.

## Example I-Example Use Case for Global Explanation

Architecture design and behavior of a neural network model during different phases of the neural network lifecycle (e.g., training, validation, testing, evaluation, deployment, refinement, monitoring, and updating) are important. Although the teams involved in the neural network lifecycle closely examine different metrics to ensure the performance of the neural network model, the neural network model is still a black box. Even the designers of the neural network do not know based on what feature(s) the neural network model learns to perform a specific task. The XAI model described herein can tell which are the most relevant and important features for the task a neural network model is trained to perform.

Consider, for example, a service order use case where the intention is to train a neural network model to predict the estimated completion date of a specific service. The XAI model takes the trained NN model and yields a relevance vector. From the relevance vector, the relevant and most important features for the neural network model can be determined. In one example, the input features to the trained NN model can be ID, OrderType, PostingDate, Priority, Sold-ToParty, Delivery Priority, Equipment, ProductID, Effort, TaskLevelComplexity, TechExpertLevel, SparePartsAvailability, and SparePartsDeliveryinDays. The XAI model will compute the relevance vector. The table below shows an example of a global explanation based on a global explainability dataset computed by the XAI model - only the top five important features indicated by the relevance vector(s) in the global explainability dataset are shown for illustrative purposes.

### TABLE

| Important Features | Importance [Very High, High, Medium Low, Unrelated] | Relevance Scores [0-1] |
|---|---|---|
| TaskLevelComplexity | Very High | 0.30 |
| TechExpertLevel | High | 0.25 |
| SparePartsAvailability | High | 0.20 |
| Priority | High | 0.15 |
| SparePartsDelivery InDays | Medium | 0.10 |

Using the global explanation generated from the output of the XAI model along with business knowledge, designers of the neural network model can determine whether the neural network model has learned the true patterns to perform the intended task or whether the neural network model has learned some hidden patterns (which may not be relevant). The global explanation can give the designers another perspective to the problem as well. For example, it may be possible that the neural network model has learned patterns that are not known by the designers and business experts but that are very relevant to the problem. In cases where the global explanation reveals that the neural network model is not looking at the right feature set, the neural network model can be adjusted (e.g., retrained, retuned, and/or redesigned) to learn the true patterns.

## Example Computing Systems

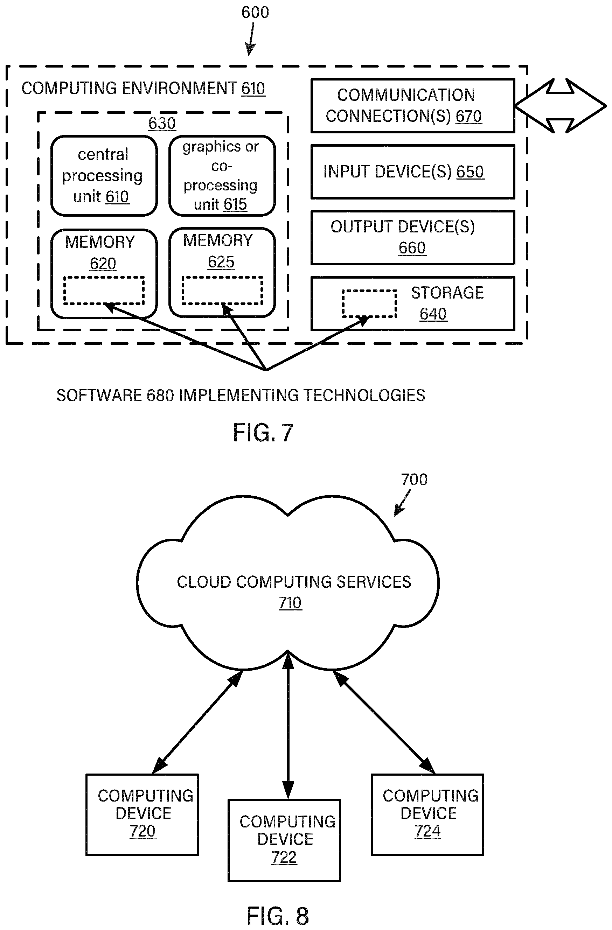

FIG. 7 depicts an example of a suitable computing system 600 in which the described innovations can be implemented. The computing system 600 is not intended to suggest any limitation as to scope of use or functionality of the present disclosure, as the innovations can be implemented in diverse computing systems.

With reference to FIG. 7, the computing system 600 includes one or more processing units 610, 615 and memory 620, 625. In FIG. 7, this basic configuration 630 is included within a dashed line. The processing units 610, 615 execute computer-executable instructions, such as for implementing the features described in the examples herein. A processing unit can be a general-purpose central processing unit (CPU), processor in an application-specific integrated circuit (ASIC), graphics processing unit (GPU), tensor processing unit (TPU), quantum processor, or any other type of processor. In a multi-processing system, multiple processing units execute computer-executable instructions to increase processing power. For example, FIG. 6 shows a central processing unit 610 as well as a graphics processing unit or co-processing unit 615. The tangible memory 620, 625 can be volatile memory (e.g., registers, cache, RAM), non-volatile memory (e.g., ROM, EEPROM, flash memory, etc.), or some combination of the two, accessible by the processing unit(s) 610, 615. The memory 620, 625 stores software 680 implementing one or more innovations described herein, in the form of computer-executable instructions suitable for execution by the processing unit(s) 610, 615.

A computing system 600 can have additional features. For example, the computing system 600 includes storage 640, one or more input devices 650, one or more output devices 660, and one or more communication connections 670, including input devices, output devices, and communication connections for interacting with a user. An interconnection mechanism (not shown) such as a bus, controller, or network interconnects the components of the computing system 600. Typically, operating system software (not shown) provides an operating environment for other software executing in the computing system 600, and coordinates activities of the components of the computing system 600.

The tangible storage 640 can be removable or non-removable, and includes magnetic disks, magnetic tapes or cassettes, CD-ROMs, DVDs, or any other medium which can be used to store information in a non-transitory way and which can be accessed within the computing system 600. The storage 640 stores instructions for the software 680 implementing one or more innovations described herein.

The input device(s) 650 can be an input device such as a keyboard, mouse, pen, or trackball, a voice input device, a scanning device, touch device (e.g., touchpad, display, or the like) or another device that provides input to the computing system 600. The output device(s) 660 can be a display, printer, speaker, CD-writer, or another device that provides output from the computing system 600, e.g., actuators or some mechanical devices like motors, 3D printers, and the like.

The communication connection(s) 670 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the context of computer-executable instructions, such as those included in program modules, being executed in a computing system on a target real or virtual processor (e.g., which is ultimately executed on one or more hardware processors). Generally, program modules or components include routines, programs, libraries, objects, classes, components, data structures, etc. that perform particular tasks or implement particular abstract data types. The functionality of the program modules can be combined or split between program modules as desired in various embodiments. Computer-executable instructions for program modules can be executed within a local or distributed computing system.

For the sake of presentation, the detailed description uses terms like "determine" and "use" to describe computer operations in a computing system. These terms are high-level descriptions for operations performed by a computer and should not be confused with acts performed by a human being. The actual computer operations corresponding to these terms vary depending on implementation.

**Computer-Readable Media**

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing system to perform the method. The technologies described herein can be implemented in a variety of programming languages.

**Example Cloud Computing Environment**

FIG. 8 depicts an example cloud computing environment 700 in which the described technologies can be implemented, including, e.g., the systems described herein. The cloud computing environment 700 comprises cloud computing services 710. The cloud computing services 710 can comprise various types of cloud computing resources, such as computer servers, data storage repositories, networking resources, etc. The cloud computing services 710 can be centrally located (e.g., provided by a data center of a business or organization) or distributed (e.g., provided by various computing resources located at different locations, such as different data centers and/or located in different cities or countries).

The cloud computing services 710 are utilized by various types of computing devices (e.g., client computing devices), such as computing devices 720, 722, and 724. For example, the computing devices (e.g., 720, 722, and 724) can be computers (e.g., desktop or laptop computers), mobile devices (e.g., tablet computers or smart phones), or other types of computing devices. For example, the computing devices (e.g., 720, 722, and 724) can utilize the cloud computing services 710 to perform computing operations (e.g., data processing, data storage, and the like).

In practice, cloud-based, on-premises-based, or hybrid scenarios can be supported.

**Additional Examples**

Additional examples based on principles described herein are enumerated below. Further examples falling within the scope of the subject matter can be configured by, for example, taking one feature of an example in isolation, taking more than one feature of an example in combination, or combining one or more features of one example with one or more features of one or more other examples.

Example 1. A computer-implemented method comprises receiving a request identifying a neural network model, the neural network model comprising a plurality of neurons arranged in a sequence of layers, a plurality of neuron weights, a plurality of neuron biases, and an input layer configured to receive an input vector with a plurality of input features; in response to receiving the request, traversing the sequence of layers one or more times while generating a plurality of relevance scores each time based on the neuron weights and neuron biases, each relevance score of the plurality of relevance scores quantifying a relevance of a neuron in a lower layer of the sequence of layers to a higher layer of the sequence of layers; generating a global explainability dataset comprising one or more relevance vectors populated with relevance scores from the plurality of relevance scores generated at the one or more times, each of the relevance scores in each relevance vector quantifying a relevance of one of the input features to a task the neural network model is trained to perform; and generating a global explanation of the neural network model based on the global explainability dataset.

Example 2. A method according to Example 1, wherein the sequence of layers comprises a plurality of hidden layers and a last layer, wherein a last hidden layer of the plurality of hidden layers precedes the last layer, wherein a first hidden layer of the plurality of hidden layers succeeds the input layer, and wherein the sequence of layers is traversed in a reverse direction from the last layer to the first hidden layer.

Example 3. A method according to Example 2, wherein generating the plurality of relevance scores comprises computing one or more relevance scores at the last layer based on neuron weights in the last layer and neuron biases in the last hidden layer.

Example 4. A method according to any one of Examples 2-3, wherein each relevance score computed at the last layer is a linear combination of a weight term and a bias term, wherein the weight term comprises a neuron weight in the last layer that connects a select neuron in the last hidden layer to a select neuron in the last layer, and wherein the bias term comprises a neuron bias connected to the select neuron in the last hidden layer.

Example 5. A method according to any one of Examples 2-4, wherein generating the plurality of relevance scores further comprises computing one or more relevance scores at the plurality of hidden layers, wherein the one or more relevance scores are computed at each one of the hidden layers based on neuron weights in the each one of the hidden layers, relevance scores in the higher layer succeeding the each one of the hidden layers, and neuron biases in a lower layer preceding the each one of the hidden layers.

Example 6. A method according to Example 5, wherein each relevance score computed at the each one of the hidden layers is a linear combination of a weighted relevance term and a bias term, wherein the weighted relevance term is based on the neuron weights in the each one of the hidden layers and the relevance scores in the higher layer succeeding the each one of the hidden layers, and wherein the bias term is based on the neuron biases in the lower layer preceding the each one of the hidden layers.

Example 7. A method according to any one of Examples 5-6, further comprising discarding the relevance scores computed at a higher layer succeeding the each one of the hidden layers after computing the relevance scores at the each one of the hidden layers.

Example 8. A method according to any one of Examples 5-7, wherein each of the one or more relevance vectors is populated with the one or more relevance scores computed at the first hidden layer during the corresponding time of traversing the sequence of layers.

Example 9. A method according to any one of Examples 2-8, wherein the last layer comprises a single neuron, wherein the sequence of layers is traversed one time corresponding to the single neuron, and wherein one relevance vector is populated using a subset of the plurality of relevance scores generated during the one time of traversing the sequence of layers.

Example 10. A method according to any one of Examples 2-8, wherein the last layer comprises a plurality of neurons, wherein the sequence of layers is traversed a plurality of times corresponding to the plurality of neurons, and wherein the global explainability dataset comprises a plurality of relevance vectors corresponding to the plurality of neurons in the last layer.

Example 11. A method according to Example 10, wherein each of the plurality of relevance vectors is populated using a subset of the plurality of relevance scores generated during the corresponding time of traversing the sequence of layers.

Example 12. A method according to any one of Examples 1-11, wherein the neural network model is a trained neural network model, and further comprising retraining the neural network model based at least in part on the global explanation.

Example 13. A method according to any one of Examples 1-11, wherein the neural network model is a trained neural network model, and further comprising receiving a modification to the global explanation and retraining the neural network model based at least in part on the modification to the global explanation.

Example 14. A method according to any one of Examples 1-13, further comprising storing the global explainability dataset in a data storage in association with the neural network model.

Example 15. A method according to any one of Examples 1-14, wherein the plurality of relevance scores are generated each time without using neuron activations of the neurons in the sequence of layers.

Example 16. One or more non-transitory computer-readable storage media storing computer-executable instructions for causing a computer system to perform operations comprising receiving a request identifying a neural network model, the neural network model comprising a plurality of neurons arranged in a sequence of layers, a plurality of neuron weights, and a plurality of neuron biases, and an input layer configured to receive an input vector with a plurality of input features; in response to receiving the request, traversing the sequence of layers one or more times while generating a plurality of relevance scores each time based on the neuron weights and neuron biases, each relevance score of the plurality of relevance scores quantifying a relevance of a neuron in a lower layer of the sequence of layers to a higher layer of the sequence of layers; populating one or more relevance vectors from the plurality of relevance scores generated at the one or more times, each of the relevance scores in each relevance vector quantifying a relevance of one of the input features to a task the neural network model is trained to perform; and generating a global explanation of the neural network model based on the one or more relevance vectors.

Example 17. One or more non-transitory computer-readable storage media storing computer-executable instructions for causing a computer system to perform operations according to Example 16, wherein the sequence of layers comprises a plurality of hidden layers and a last layer, wherein a last hidden layer of the plurality of hidden layers precedes the last layer, wherein a first hidden layer of the plurality of hidden layers succeeds the input layer, and wherein the sequence of layers is traversed in a reverse direction from the last layer to the first hidden layer.

Example 18. One or more non-transitory computer-readable storage media storing computer-executable instructions for causing a computer system to perform operations according to Example 17, wherein generating the plurality of relevance scores comprises computing one or more relevance scores at the last layer based on neuron weights in the last layer and neuron biases in the last hidden layer; computing one or more relevance scores at each one of the hidden layers based on neuron weights in the each one of the hidden layers, relevance scores in the higher layer succeeding the each one of the hidden layers, and neuron biases in the lower layer preceding the each one of the hidden layers; and after generating one or more relevance scores at each one of the hidden layers, discarding the one or more relevance scores generated at the higher layer succeeding the each one of the hidden layers.

Example 19. One or more non-transitory computer-readable storage media storing computer-executable instructions for causing a computer system to perform operations according to Example 16, wherein the operations further comprise retraining the neural network model based at least in part on the global explanation.

Example 20. A computing system comprising one or more processing units coupled to memory; one or more computer readable storage media storing instructions that when executed cause the computing system to perform operations comprising: receiving a request identifying a neural network model, the neural network model comprising a plurality of neurons arranged in a sequence of layers, a plurality of neuron weights, a plurality of neuron biases, and an input layer configured to receive an input vector with a plurality of input features; in response to receiving the request, traversing the sequence of layers one or more times while generating a plurality of relevance scores each time based on the neuron weights and neuron biases, each relevance score of the plurality of relevance scores quantifying a relevance of a neuron in a lower layer of the sequence of layers to a higher layer of the sequence of layers; generating a global explainability dataset comprising one or more relevance vectors populated with relevance scores from the plurality of relevance scores generated at the one or more times, each of the relevance scores in each relevance vector quantifying a relevance of one of the input features to a task the neural network model is trained to perform; and generating a global explanation of the neural network model based on the global explainability dataset.

## Example Implementation

Although the operations of some of the disclosed methods are described in a particular, sequential order for convenient presentation, such manner of description encompasses rearrangement, unless a particular ordering is required by specific language set forth herein. For example, operations described sequentially can in some cases be rearranged or performed concurrently.

## Example Alternatives

The technology has been described with a selection of implementations and examples, but these preferred implementations and examples are not to be taken as limiting the scope of the technology since many other implementations and examples are possible that fall within the scope of the disclosed technology. The scope of the disclosed technology includes what is covered by the scope and spirit of the following claim.

## Claims

1. A computer-implemented method comprising:

   receiving a request identifying a neural network model, the neural network model comprising a plurality of neurons arranged in a sequence of layers, a plurality of neuron weights, a plurality of neuron biases, and an input layer configured to receive an input vector with a plurality of input features;
   in response to receiving the request, traversing the sequence of layers one or more times while generating a plurality of relevance scores each time based on the neuron weights and neuron biases, each relevance score of the plurality of relevance scores quantifying a relevance of a neuron in a lower layer of the sequence of layers to a higher layer of the sequence of layers;
   generating a global explainability dataset comprising one or more relevance vectors populated with relevance scores from the plurality of relevance scores generated at the one or more times, each of the relevance scores in each relevance vector quantifying a relevance of one of the input features to a task the neural network model is trained to perform; and
   generating a global explanation of the neural network model based on the global explainability dataset.

2. The method of claim 1, wherein the sequence of layers comprises a plurality of hidden layers and a last layer, wherein a last hidden layer of the plurality of hidden layers precedes the last layer, wherein a first hidden layer of the plurality of hidden layers succeeds the input layer, and wherein the sequence of layers is traversed in a reverse direction from the last layer to the first hidden layer.

3. The method of claim 2, wherein generating the plurality of relevance scores comprises computing one or more relevance scores at the last layer based on neuron weights in the last layer and neuron biases in the last hidden layer.

4. The method of claim 3, wherein each relevance score computed at the last layer is a linear combination of a weight term and a bias term, wherein the weight term comprises a neuron weight in the last layer that connects a select neuron in the last hidden layer to a select neuron in the last layer, and wherein the bias term comprises a neuron bias connected to the select neuron in the last hidden layer.

5. The method of claim 3 or 4, wherein generating the plurality of relevance scores further comprises computing one or more relevance scores at the plurality of hidden layers, wherein the one or more relevance scores are computed at each one of the hidden layers based on neuron weights in the each one of the hidden layers, relevance scores in the higher layer succeeding the each one of the hidden layers, and neuron biases in a lower layer preceding the each one of the hidden layers.

6. The method of claim 5, wherein each relevance score computed at the each one of the hidden layers is a linear combination of a weighted relevance term and a bias term, wherein the weighted relevance term is based on the neuron weights in the each one of the hidden layers and the relevance scores in the higher layer succeeding the each one of the hidden layers, and wherein the bias term is based on the neuron biases in the lower layer preceding the each one of the hidden layers.

7. The method of claim 5, further comprising discarding the relevance scores computed at a higher layer succeeding the each one of the hidden layers after computing the relevance scores at the each one of the hidden layers; and/or wherein each of the one or more relevance vectors is populated with the one or more relevance scores computed at the first hidden layer during the corresponding time of traversing the sequence of layers.

8. The method of any one of claims 2 to 7, wherein the last layer comprises a single neuron, wherein the sequence of layers is traversed one time corresponding to the single neuron, and wherein one relevance vector is populated using a subset of the plurality of relevance scores generated during the one time of traversing the sequence of layers.

9. The method of any one of claims 2 to 7, wherein the last layer comprises a plurality of neurons, wherein the sequence of layers is traversed a plurality of times corresponding to the plurality of neurons, and wherein the global explainability dataset comprises a plurality of relevance vectors corresponding to the plurality of neurons in the last layer; wherein optionally each of the plurality of relevance vectors is populated using a subset of the plurality of relevance scores generated during the corresponding time of traversing the sequence of layers.

10. The method of any one of claims 1 to 9, wherein the neural network model is a trained neural network model, and further comprising retraining the neural network model based at least in part on the global explanation; and/or wherein the neural network model is a trained neural network model, and further comprising receiving a modification to the global explanation and retraining the neural network model based at least in part on the modification to the global explanation.

11. The method of any one of claims 1 to 10, further comprising storing the global explainability dataset in a data storage in association with the neural network model; and/or wherein the plurality of relevance scores are generated each time without using neuron activations of the neurons in the sequence of layers.

12. One or more non-transitory computer-readable storage media storing computer-executable instructions for causing a computer system to perform operations comprising:

   receiving a request identifying a neural network model, the neural network model comprising a plurality of neurons arranged in a sequence of layers, a plurality of neuron weights, a plurality of neuron biases, and an input layer configured to receive an input vector with a plurality of input features;
   in response to receiving the request, traversing the sequence of layers one or more times while generating a plurality of relevance scores each time based on the neuron weights and neuron biases, each relevance score of the plurality of relevance scores quantifying a relevance of a neuron in a lower layer of the sequence of layers to a higher layer of the sequence of layers;
   populating one or more relevance vectors from the plurality of relevance scores generated at the one or more times, each of the relevance scores in each relevance vector quantifying a relevance of one of the input features to a task the neural network model is trained to perform; and
   generating a global explanation of the neural network model based on the one or more relevance vectors.

**13.** The one or more non-transitory computer-readable storage media of claim 12, wherein the sequence of layers comprises a plurality of hidden layers and a last layer, wherein a last hidden layer of the plurality of hidden layers precedes the last layer, wherein a first hidden layer of the plurality of hidden layers succeeds the input layer, and wherein the sequence of layers is traversed in a reverse direction from the last layer to the first hidden layer; wherein generating the plurality of relevance scores optionally comprises:

computing one or more relevance scores at the last layer based on neuron weights in the last layer and neuron biases in the last hidden layer;

computing one or more relevance scores at each one of the hidden layers based on neuron weights in the each one of the hidden layers, relevance scores in the higher layer succeeding the each one of the hidden layers, and neuron biases in the lower layer preceding the each one of the hidden layers; and

after generating one or more relevance scores at each one of the hidden layers, discarding the one or more relevance scores generated at the higher layer succeeding the each one of the hidden layers.

**14.** The one or more non-transitory computer-readable storage media of claim 16, wherein the operations further comprise retraining the neural network model based at least in part on the global explanation.

**15.** A computing system comprising:

one or more processing units coupled to memory;

one or more computer readable storage media storing instructions that when executed cause the computing system to perform operations comprising:

receiving a request identifying a neural network model, the neural network model comprising a plurality of neurons arranged in a sequence of layers, a plurality of neuron weights, a plurality of neuron biases, and an input layer configured to receive an input vector with a plurality of input features;

in response to receiving the request, traversing the sequence of layers one or more times while generating a plurality of relevance scores each time based on the neuron weights and neuron biases, each relevance score of the plurality of relevance scores quantifying a relevance of a neuron in a lower layer of the sequence of layers to a higher layer of the sequence of layers;

generating a global explainability dataset comprising one or more relevance vectors populated with relevance scores from the plurality of relevance scores generated at the one or more times, each of the relevance scores in each relevance vector quantifying a relevance of one of the input features to a task the neural network model is trained to perform; and

generating a global explanation of the neural network model based on the global explainability dataset.

100

AI PLATFORM <u>110</u>

$$\begin{bmatrix} \kappa_1 \\ \kappa_2 \\ \vdots \\ \kappa_m \end{bmatrix}$$

XAI MODEL
<u>130</u>

GLOBAL
EXPLAINABILITY
DATASET
<u>140</u>

INTERPRETATIONS
UNIT <u>160</u>

EXPLANATIONS
UNIT <u>170</u>

GLOBAL
EXPLANATION
<u>150</u>

NEURAL NETWORK
MODEL
<u>120</u>

NEURAL NETWORK
MODEL
<u>120</u>

DATA
STORAGE
<u>180</u>

FIG. 1

200

```
┌─────────────────────────────────────────┐
│   RECEIVE A REQUEST TO GENERATE A GLOBAL  │
│  EXPLANATION FOR A NEURAL NETWORK MODEL   │
│                   210                     │
└─────────────────────────────────────────┘
                    │
                    ▼
┌─────────────────────────────────────────┐
│  TRAVERSE NEURAL NETWORK MODEL LAYERS     │
│   WHILE GENERATING RELEVANCE SCORES       │
│    BASED ON WEIGHTS AND BIASES OF THE     │
│         NEURAL NETWORK MODEL              │
│                   220                     │
└─────────────────────────────────────────┘
                    │
                    ▼
┌─────────────────────────────────────────┐
│   GENERATE GLOBAL EXPLAINABILITY DATASET  │
│        USING THE RELEVANCE SCORES         │
│                   230                     │
└─────────────────────────────────────────┘
                    │
                    ▼
┌─────────────────────────────────────────┐
│   GENERATE A GLOBAL EXPLANATION OF THE    │
│   NEURAL NETWORK MODEL BASED ON THE       │
│    GLOBAL EXPLAINABILITY DATASET          │
│                   240                     │
└─────────────────────────────────────────┘
```

FIG. 2

EP 4 198 837 A1

FIG. 3A

19

FIG. 3B

FIG. 3C

FIG. 3D

EP 4 198 837 A1

FIG. 3E

FIG. 3F

FIG. 3G

FIG. 4A

FIG. 4B

FIG. 5

500

RECEIVE TRANSACTION
510

OBTAIN A NEURAL NETWORK MODEL
INDICATED IN THE TRANSACTION
520

PROVIDE THE NEURAL NETWORK MODEL
TO AN APPROPRIATE XAI MODEL
530

GENERATE A GLOBAL EXPLAINABILITY
DATASET WITH THE XAI MODEL AND
WEIGHTS AND BIASES OF THE NEURAL
NETWORK MODEL
540

GENERATE A GLOBAL EXPLANATION OF
THE NEURAL NETWORK MODEL BASED
ON THE GLOBAL EXPLAINABILITY DATASET
550

PRESENT THE GLOBAL EXPLANATION TO
AN END USER
560

RECEIVE A USER RESPONSE TO
THE GLOBAL EXPLANATION
570

CONSTRUCT AN AUGMENTED
TRANSACTION
580

FIG. 6

600

COMPUTING ENVIRONMENT 610

630

central processing unit 610

graphics or co-processing unit 615

MEMORY 620

MEMORY 625

COMMUNICATION CONNECTION(S) 670

INPUT DEVICE(S) 650

OUTPUT DEVICE(S) 660

STORAGE 640

SOFTWARE 680 IMPLEMENTING TECHNOLOGIES

FIG. 7

700

CLOUD COMPUTING SERVICES 710

COMPUTING DEVICE 720

COMPUTING DEVICE 722

COMPUTING DEVICE 724

FIG. 8

Europäisches
Patentamt

European
Patent Office

Office européen
des brevets

# EUROPEAN SEARCH REPORT

Application Number

EP 22 21 2970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JUNG JAY HOON ET AL: "A Metric to Measure Contribution of Nodes in Neural Networks", 2019 IEEE SYMPOSIUM SERIES ON COMPUTATIONAL INTELLIGENCE (SSCI), IEEE, 6 December 2019 (2019-12-06), pages 1508-1515, XP033717199, DOI: 10.1109/SSCI44817.2019.9002851 [retrieved on 2020-02-18] * page 1508 - page 1514, right-hand column, paragraph 6 * ----- | 1-15 | INV. G06N5/045 ADD. G06N3/045 |
| A | AMARASINGHE KASUN ET AL: "Explaining What a Neural Network has Learned: Toward Transparent Classification", 2019 IEEE INTERNATIONAL CONFERENCE ON FUZZY SYSTEMS (FUZZ-IEEE), IEEE, 23 June 2019 (2019-06-23), pages 1-6, XP033626860, DOI: 10.1109/FUZZ-IEEE.2019.8858899 [retrieved on 2019-10-03] * the whole document * ----- | 1-15 | |
| A | IBRAHIM MARK MARK IBRAHIM@CAPITALONE COM ET AL: "Global Explanations of Neural Networks Mapping the Landscape of Predictions", COMPUTER SUPPORTED COOPERATIVE WORK AND SOCIAL COMPUTING, ACM, 2 PENN PLAZA, SUITE 701NEW YORKNY10121-0701USA, 27 January 2019 (2019-01-27), pages 279-287, XP058702172, DOI: 10.1145/3306618.3314230 ISBN: 978-1-4503-6692-2 * the whole document * ----- -/-- | 1-15 | TECHNICAL FIELDS SEARCHED (IPC) G06N |

The present search report has been drawn up for all claims

| Place of search | Date of completion of the search | Examiner |
|---|---|---|
| The Hague | 12 April 2023 | Volkmer, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

# EUROPEAN SEARCH REPORT

Europäisches Patentamt
European Patent Office
Office européen des brevets

**Application Number**

EP 22 21 2970

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ATEFEH SHAHROUDNEJAD: "A Survey on Understanding, Visualizations, and Explanation of Deep Neural Networks", ARXIV.ORG, CORNELL UNIVERSITY LIBRARY, 201 OLIN LIBRARY CORNELL UNIVERSITY ITHACA, NY 14853, 2 February 2021 (2021-02-02), XP081874145, * the whole document * | 1-15 | |
| A | WO 2016/150472 A1 (FRAUNHOFER GES FORSCHUNG [DE]; TECHNISCHE UNIVERSITÄT BERLIN [DE]) 29 September 2016 (2016-09-29) * the whole document * | 1-15 | |
| A | WO 2021/099338 A1 (UMNAI LTD [MT]) 27 May 2021 (2021-05-27) * the whole document * | 1-15 | |

TECHNICAL FIELDS
SEARCHED        (IPC)

The present search report has been drawn up for all claims

| Place of search | Date of completion of the search | Examiner |
|---|---|---|
| The Hague | 12 April 2023 | Volkmer, Markus |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 21 2970

This annex lists the patent family members relating to the patent documents cited in the above-mentioned European search report.
The members are as contained in the European Patent Office EDP file on
The European Patent Office is in no way liable for these particulars which are merely given for the purpose of information.

12-04-2023

| Patent document cited in search report | | Publication date | Patent family member(s) | | Publication date |
|---|---|---|---|---|---|
| WO 2016150472 | A1 | 29-09-2016 | BR | 112017019821 A2 | 15-05-2018 |
| | | | CA | 2979579 A1 | 29-09-2016 |
| | | | CN | 107636693 A | 26-01-2018 |
| | | | EP | 3271863 A1 | 24-01-2018 |
| | | | JP | 6725547 B2 | 22-07-2020 |
| | | | JP | 2018513507 A | 24-05-2018 |
| | | | KR | 20170134508 A | 06-12-2017 |
| | | | RU | 2017135085 A | 05-04-2019 |
| | | | US | 2018018553 A1 | 18-01-2018 |
| | | | WO | 2016150472 A1 | 29-09-2016 |
| WO 2021099338 | A1 | 27-05-2021 | EP | 4062330 A1 | 28-09-2022 |
| | | | WO | 2021099338 A1 | 27-05-2021 |

EPO FORM P0459

For more details about this annex : see Official Journal of the European Patent Office, No. 12/82